Europäisches Patentamt

European Patent Office

Office européen des brevets

(11) Veröffentlichungsnummer: **0 262 342**

**A1**

# EUROPÄISCHE PATENTANMELDUNG

(21) Anmeldenummer 87111372.6

(51) Int Cl.⁴ **G01N 25/68**

(22) Anmeldetag 06.08.87

(30) Priorität 29.09.86 DE 3633015

(43) Veröffentlichungstag der Anmeldung:
06.04.88 Patentblatt 88/14

(84) Benannte Vertragsstaaten:
**DE FR GB NL**

(71) Anmelder: **Drägerwerk Aktiengesellschaft**
**Moislinger Allee 53-55**
**D-2400 Lübeck 1(DE)**

(72) Erfinder: **Lagois, Johannes, Dr. Dr. habil.**
**Dipl.-Phys.**
**Schönböckener Strasse 37**
**D-2400 Lübeck(DE)**
Erfinder: **Thoren, Werner, Dr. Dipl.-Phys.**
**Gertrudenstrasse 1a**
**D-2400 Lübeck(DE)**
Erfinder: **Kähning, Stefan**
**Westhoffstrasse 49**
**D-2400 Lübeck(DE)**

(54) **Verfahren und Anordnung zur Messung des Taupunktes.**

(57) Ein Verfahren zur Messung des Taupunktes, bei dem eine der zu untersuchenden Atmosphäre ausgesetzte Oberfläche eines Sensors durch eine regelbare Temperiervorrichtung auf eine solche Temperatur gebracht wird, die zur Bildung eines Taubeschlages auf der Sensoroberfläche führt, wodurch eine spezifische Sensoreigenschaft verändert und zur Regelung der Temperiervorrichtung auf konstante Tauschichtdicke an der Sensoroberfläche verarbeitet wird, wobei die dabei durch einen Temperaturfühler (4) festgestellte Sensortemperatur als Taupunkttemperatur angezeigt wird, soll so verbessert werden, daß kurzfristig auftretende Veränderungen bzw. Schwankungen des Taupunktes von einer Temperiervorrichtung mit genügend kleiner Zeitkonstanten ausgeglichen und damit die Taupunkttemperatur erfaßt werden kann. Ein solches Verfahren zeichnet sich dadurch aus, daß dem Sensor (1) sowohl mittels einer Kühlvorrichtung (8) durch Vorgabe einer einstellbaren Kühlleistung mehr Wärme, als zur Erreichung der Taupunkttemperatur notwendig ist, entzogen, als auch durch eine zusätzliche Heizvorrichtung (6) eine solche regelbare Heizleistung zugeführt wird, daß die Sensoroberfläche die Taupunkttemperatur erreicht.

Fig. 3

## Verfahren und Anordnung zur Messung des Taupunktes

Die Erfindung betrifft ein Verfahren zur Messung des Taupunktes, bei dem eine der zu untersuchenden Atmosphäre ausgesetzte Oberfläche eines Sensors durch eine regelbare Temperiervorrichtung auf ine solche Temperatur gebracht wird. die zur Bildung eines Taubeschlages auf der Sensoroberfläche führt. wodurch eine spezifische Sensoreigenschaft verändert und zur Regelung der Temperiervorrichtung auf konstante Tauschichtdicke an der Sensoroberfläche verarbeitet wird, wobei die dabei durch einen Temperaturfühler festgestellte Sensortemperatur als Taupunkttemperatur angezeigt wird. Außerdem wird eine Meßanordnung zur Durchführung eines solchen Verfahrens angegeben.

Zur Messung des Taupunktes eines Gases werden Taupunktsensoren eingesetzt, welche auf einer solchen Temperatur gehalten werden, daß es zur Bildung eines Taubeschlages auf der Sensoroberfläche kommt. Dabei ändert sich eine spezifische Sensoreigenschaft, beispielsweise die Kapazität eines Kondensators infolge der großen Dielektrizitätskonstante von Wasser, in Abhängigkeit von dem Taubeschlag. Zur Einstellung und Regelung der Sensortemperatur auf eine konstante Tauschichtdicke wird eine Kühleinrichtung als Temperiervorrichtung eingesetzt. Die Temperatur des Sensors wird durch die Temperiervorrichtung bei sich veränderndem Dampfgehalt in der Atmosphäre ständig auf den jeweils unterschiedlichen Taupunkt nachgeführt. Ein Temperaturfühler mißt die Temperatur des Sensors und zeigt sie als Taupunkttemperatur an (DE-OS 32 31 995).

Bei dem bekannten Taupunktsensor wird die Kühlleistung derart geregelt, daß eine konstante Schichtdicke des Taubeschlages aufrechterhalten wird, welche anhand der konstanten Kapazität des Sensorelementes kontrolliert wird. Temperaturschwankungen und/oder Schwankungen des Dampfgehaltes in der zu untersuchenden Atmosphäre erfordern daher ein entsprechendes Nachführen der Kühlleistung an der Kühlvorrichtung. Da die Peltierelemente zum Zuführen bzw. Abführen der erzeugten Wärmemenge an das zu temperierende Sensorelement eine gewisse räumliche Ausdehnung und damit auch eine hohe Wärmekapazität besitzen, ist ihre Zeitkonstante zu groß, um kurzfristig auftretende Änderungen des Taupunktes genügend schnell nachregeln zu können.

Der vorliegenden Erfindung liegt somit die Aufgabe zugrunde. ein Verfahren der genannten Art derart zu verbessern. daß kurzfristig auftretende Veränderungen bzw. Schwankungen des Taupunktes von einer Temperiervorrichtung mit genügend kleiner Zeitkonstanten ausgeglichen und damit die Taupunkttemperatur erfaßt werden kann.

Die Lösung der Aufgabe erfolgt dadurch. daß dem Sensor sowohl mittels einer Kühlvorrichtung durch Vorgabe einer einstellbaren Kühlleistung mehr Wärme. als zur Erreichung der Taupunkttemperatur notwendig ist. entzogen, als auch durch eine zusätzliche Heizvorrichtung eine solche regelbare Heizleistung zugeführt wird. daß die Sensoroberfläche die Taupunkttemperatur erreicht.

Durch die Aufteilung der Temperiervorrichtung in eine separate Kühlvorrichtung und eine getrennte Heizvorrichtung kann die Kühlleistung so bemessen werden. daß die Oberfläche des Sensorelementes deutlich unterhalb, beispielsweise 2 °C. des zu erwartenden Taupunktes eingestellt ist. Dadurch wird das Sensorelement auf eine Grundtemperatur abgekühlt, wodurch die Heizvorrichtung lediglich die relativ kleine Temperaturspanne von der Grundtemperatur bis zur tatsächlichen Taupunkttemperatur überbrücken muß. Zur Feststellung des Taupunktes ist daher nicht mehr notwendig. daß die Temperiervorrichtung als einstufige Regeleinheit den zu überdeckenden Temperaturmeßbereich ausregeln muß, sondern es kann jetzt einerseits eine separate Kühlvorrichtung vorgesehen werden, die dem Sensor mehr Wärme, als zur Erreichung des zu erwartenden Taupunktes notwendig wäre, entzieht, wobei andererseits eine Heizvorrichtung geringer Wärmekapazität für eine empfindlichere und leichter regelbare Wärmezufuhr zur Erreichung der zu bestimmenden Taupunkttemperatur sorgt. Schwankungen des Taupunktes innerhalb des Regelbereiches können somit durch die Heizvorrichtung schnell und genau ausgeglichen werden.

Die Vorgabe der Kühlleistung für die Kühlvorrichtung richtet sich entweder nach den erwarteten thermischen Daten der zu untersuchenden Atmosphäre oder aber sie erfolgt zweckmäßigerweise dadurch, daß die von dem Temperaturfühler festgestellte Taupunkttemperatur als Maß für die Kühlleistung herangezogen wird. So kann beispielsweise die Vorgabe dahingehend bestimmt werden, daß die Kühlleistung das Sensorelement ständig auf beispielsweis 2 °C unterhalb der gemessenen Taupunkttemperatur halten könnte. Die Heizvorrichtung braucht dann nur eine Temperaturdifferenz von 2 °C auszuregeln.

Eine Meßanordnung zur Durchführung des Verfahrens enthält das Sensorelement zusammen mit dem Temperaturfühler und einer Heizvorrichtung auf einem gemeinsamen Trägersubstrat, welches in thermischem Kontakt mit einer Kühlvorrichtung steht, wobei die Heizvorrichtung zur Regelung der Heizleistung und die Kühlvorrichtung zur Vorgabe der Kühlleistung an eine Regeleinheit angeschlossen sind.

Durch diese Anordnung wird das Sensorelement auf eine Grundtemperatur unterhalb des Taupunktes abgekühlt und durch die Heizvorrichtung so weit erwärmt, bis die Temperaturdifferenz zwischen Grundtemperatur und Taupunkttemperatur erreicht ist. In diesem Falle entsteht auf der Oberfläche des Sensorelementes ein Taubeschlag konstanter Dicke. Im Falle eines Kondensators als Sensorelement erfolgt dadurch eine Kapazitätsänderung, die als ein entsprechendes Auswertesignal an die Regeleinheit abgegeben wird. Veränderungen des Taupunktes und somit Veränderungen der Sensoreigenschaften werden durch entsprechendes Erhöhen bzw. Erniedrigen der Heizleistung in der Heizvorrichtung ausgeglichen. Durch den ständigen thermischen Kontakt mit der Kühlvorrichtung wird nach Erniedrigung der Heizleistung die überschüssige Wärmemenge der Heizvorrichtung unverzüglich abgeleitet, so daß in jedem Falle ein kurzes Ansprechverhalten des Sensorelementes erzielt wird.

Vorteilhafterweise kann die Regeleinheit mit dem Temperaturfühler verbunden sein, so daß die Vorgabe für die Kühlleistung auf die augenblickliche Taupunkttemperatur bezogen werden kann. Sinkt z. B. die Taupunkttemperatur, bleibt dennoch ständig der vorgebbare Temperaturregelbereich für die Heizvorrichtung der gleiche, da er entsprechend der Taupunktänderung mit verschoben wird.

Ein Ausführungsbeispiel der Erfindung wird anhand der schematischen Zeichnung dargestellt und im folgenden näher erläutert.

Es zeigen

Figur 1 die Draufsicht auf Sensor, Heizvorrichtung und Temperaturfühler in Dünnschichttechnik

Figur 2 die Ansicht des Sensors nach Figur 1, montiert auf einer Kühlvorrichtung

Figur 3 das Blockdiagramm für eine Meßanordnung.

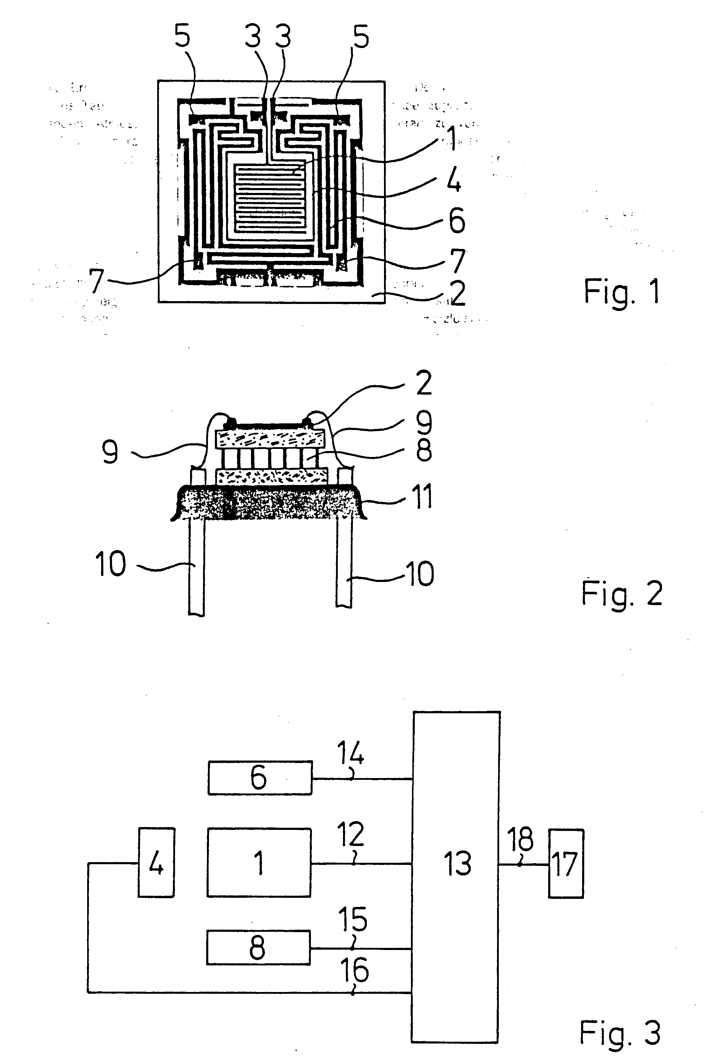

In Figur 1 ist ein Sensor (1) dargestellt, der aus kammartig ineinandergreifenden Zähnen besteht, welche auf ein Trägersubstrat (2) aufgebracht sind. Der Sensor (1) besitzt Sensoranschlüsse (3). Den Sensor (1) umgibt in geringem Abstand eine als Temperaturfühler (4) ausgebildete Leiterbahn mit zwei Temperaturmeßanschlüssen (5). Um den Temperaturfühler (4) schlingen sich ineinander gewunden die Leiterbahnen einer Heizvorrichtung (6), welche Heizanschlüsse (7) besitzt. Sämtliche beschriebenen Leitungszüge sind in Dünnschichttechnik auf das Trägersubstrat (2) aufgebracht.

Das Trägersubstrat (2) wird mit seiner dem Sensor (1) abgewandten Fläche auf eine Kühlvorrichtung (8) in thermischen Kontakt gebracht, wie dies in Figur 2 dargestellt ist. Dabei ist die Kühlvorrichtung (8) als Peltierkühler ausgebildet. Die jeweiligen Anschlüsse (3, 5, 7) des Sensors (1), des Temperaturfühlers (4) und der Heizvorrichtung (6) sind über entsprechende Anschlußdrähte (9) an dazugehörige Kontaktstifte (10) angeschlossen, welche in einem Sockel (11) befestigt sind.

Das Blockdiagramm nach Figur 3 zeigt schematisch den Sensor (1), dessen Sensoranschlüsse (3) über eine Sensorleitung (12) an eine Regeleinheit (13) angeschlossen sind. Mit der Regeleinheit (13) sind ebenfalls die Heizvorrichtung (6) und die Kühlvorrichtung (8) über entsprechende Heizleitung (14) und Kühlanschlußleitung (15) verbunden. Der Temperaturfühler (4) ist über eine Temperaturmeßleitung (16) an die Regeleinheit (13) angeschlossen. Von der Regeleinheit (13) führt eine Verbindungsleitung (18) zu einem Anzeigegerät (17) für die Taupunkttemperatur.

Zum Betrieb der Meßanordnung wird durch die Regeleinheit (13) die Kühlleistung der Kühlvorrichtung (8) so festgelegt, daß die zusätzlich eingeschaltete Heizvorrichtung (6), deren Heizleistung ebenfalls von der Regeleinheit (13) bestimmt wird, den Sensor (1) auf eine solche Temperatur anhebt, bis der Sensor (1) über die Sensorleitung (12) ein Signal an die Regeleinheit (13) abgibt und somit anzeigt, daß der Taupunkt erreicht ist. Die dabei von dem Temperaturfühler (4) gemessene Temperatur wird über die Temperaturmeßleitung (16) an die Regeleinheit (13) abgegeben und von dem Anzeigegerät (17) als Taupunkttemperatur angezeigt. Besteht der Sensor beispielsweise aus einem Flächenkondensator, dessen Kapazität sich bei Bildung eines Taubeschlags sprunghaft ändert, wird ein entsprechendes Signal über die Sensorleitung (12) an die Regeleinheit (13) abgegeben, die dann sofort die Heizleistungszufuhr an die Heizvorrichtung (6) auf dem augenblicklichen Wert konstant hält. Die dabei von dem Temperaturfühler (4) gemessene Sensortemperatur wird als Taupunkttemperatur am Anzeigegerät (17) angezeigt. Verändert sich die Temperatur oder der Dampfgehalt der zu untersuchenden Atmosphäre, verändert sich der Taubelag in seiner Dicke, welches zu einer Veränderung der Kapazität des Sensors führt. Die Regeleinheit (13) versucht dann durch gezielte Abgabe der Heizleistung an die Heizvorrichtung (6), die ursprüngliche, einmal vorgegebene Schichtdicke des Taubelages wiederher-

zustellen. Wegen der geringen Wärmekapazität der in Dünnschichttechnik aufgebrachten Heizvorrichtung (6) kann dieser Regelvorgang mit einer sehr kurzen Zeitkonstante erfolgen. Dabei wird der Sensor (1) durch die Kühlvorrichtung (8) sofort abgekühlt, sobald die entsprechende Heizleistung der Heizvorrichtung (6) verringert wurde Zur Erwärmung des Sensors (1) braucht die Heizleistung der Heizvorrichtung (6) lediglich entsprechend erhöht zu werden Auf diese Weise erhält man eine Meßanordnung, bei der zur Messung der Taupunkttemperatur eine leistungsarme, rasch reagierende Temperaturregelung in einem engen, einer durch die Kühlvorrichtung (8) vorgegebenen Grundtemperatur überlagerten Temperaturregelbereich erfolgt.

**Ansprüche**

1. Verfahren zur Messung des Taupunktes, bei dem eine der zu untersuchenden Atmosphäre ausgesetzte Oberfläche eines Sensors durch eine regelbare Temperiervorrichtung auf eine solche Temperatur gebracht wird, die zur Bildung eines Taubeschlages auf der Sensoroberfläche führt, wodurch eine spezifische Sensoreigenschaft verändert und zur Regelung der Temperiervorrichtung auf konstante Tauschichtdicke an der Sensoroberfläche verarbeitet wird, wobei die dabei durch einen Temperaturfühler festgestellte Sensortemperatur als Taupunkttemperatur angezeigt wird, dadurch gekennzeichnet, daß dem Sensor (1) sowohl mittels einer Kühlvorrichtung (8) durch Vorgabe einer einstellbaren Kühlleistung mehr Wärme, als zur Erreichung der Taupunkttemperatur notwendig ist, entzogen, als auch durch eine zusätzliche Heizvorrichtung (6) eine solche regelbare Heizleistung zugeführt wird, daß die Sensoroberfläche die Taupunkttemperatur erreicht.

2. Verfahren nach Anspruch 1, dadurch gekennzeichnet, daß die Temperatur des Temperaturfühlers (4) als Einstellsignal zur Vorgabe der Kühlleistung der Kühlvorrichtung (8) zugeführt wird.

3. Meßanordnung zur Durchführung des Verfahrens nach Anspruch 1 und 2, dadurch gekennzeichnet, daß der Sensor (1) zusammen mit den Temperaturfühler (4) und einer Heizvorrichtung (6) auf einem gemeinsamen Trägersubstrat (2) angeordnet sind, welches in thermischem Kontakt mit einer Kühlvorrichtung (8) steht, und daß die Heizvorrichtung (6) zur Regelung der Heizleistung und die Kühlvorrichtung (8) zur Vorgabe der Kühlleistung an eine Regeleinheit (13) angeschlossen sind.

4. Meßanordnung nach Anspruch 3, dadurch gekennzeichnet, daß der Temperaturfühler (4) zur Vorgabe der Kühlleistung mit der Regeleinheit (13) verbunden ist.

4

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-U-8 223 976 (ENDRESS U. HAUSER GMBH) <br> * Seiten 1, 2, 6, Zeilen 9-20 * <br> --- | 1-4 | G 01 N 25/68 |
| X | MEASUREMENT AND INSTRUMENTATION, ACTA IMEKO, Band II, 1973, Seiten 175-184, Verlag der Ungarischen Akademie der Wissenschaften; D. SCHREIBER "A new method of measuring and controlling humidity by electric cooling elements and capacitive sensors for dew" <br> * Seiten 175, 179, Zeilen 3-10 * <br> --- | 1-4 | |
| A | FR-A-2 532 427 (ENDRESS U. HAUSER GMBH U. CO.) <br> * Seite 4, Zeile 23 - Seite 5, Zeile 6 <br> * & DE - A - 3 231 995 (Kat. D) <br> --- | 1-4 | |
| A | DE-B-2 235 212 (KOMPLEXNYJ NAUTSCHNO-ISSLEDOWATELSKIJ PROJEKTNO-KONSTRUKTORSKIJ INSTITUT OBOGASCHTSCHENIJA TWERDYCH GORJUTSCHICH ISKOPAJEMYCH) <br> * Anspruch; Spalte 2, Zeilen 12-32 * <br> --- | 1-4 | |
| A | DE-A-3 243 320 (ENDRESS U. HAUSER GMBH U. CO.) <br> * Seiten 5, 6 * <br> --- | 1 | RECHERCHIERTE SACHGEBIETE (Int. Cl.4) <br><br> G 01 N 25/00 <br> G 01 N 27/00 |
| A | DE-A-2 551 217 (TESLA) <br> * Seiten 2, 4, Zeilen 1-10 * <br> ----- | 1,3 | |

Der vorliegende Recherchenbericht wurde für alle Patentansprüche erstellt

| Recherchenort | Abschlußdatum der Recherche | Prüfer |
|---|---|---|
| BERLIN | 29-11-1987 | BRISON O.P. |

BAD ORIGINAL